# EUROPÄISCHE PATENTSCHRIFT

(11) **EP 0 848 680 B1**
(45) Veröffentlichungstag und Bekanntmachung des Hinweises auf die Patenterteilung: **05.04.2000**
(21) Anmeldenummer: 96931782.5
(22) Anmeldetag: 09.09.1996
(51) Int. Cl.: B62D 7/18, B60G 15/07

(54) **ACHSSCHENKEL IN VERBUNDBAUWEISE**
SANDWICH-STRUCTURE AXLE JOURNAL
FUSEE D'ESSIEU DE STRUCTURE COMPOSITE

(30) Priorität: 08.09.1995 DE 19533315
(43) Veröffentlichungstag der Anmeldung: 24.06.1998
(73) Patentinhaber: Lucas Industries Limited, London W1Y 4DJ (GB)
(72) Erfinder: OP DEN CAMP, Eckart, D-56073 Koblenz (DE); SEUSER, Ulrich, D-56566 Neuwied (DE)
(74) Vertreter: Beyer, Andreas, Dr.
(86) Internationale Anmeldenummer: EP9603938
(87) Internationale Veröffentlichungsnummer: WO9709222

(56) Entgegenhaltungen:
- BE-A- 571 476
- US-A- 3 147 026
- PATENT ABSTRACTS OF JAPAN vol. 005, no. 155 (M-090), 30.September 1981 & JP 56 082668 A (AKEBONO BRAKE IND CO LTD), 6.Juli 1981,

## Beschreibung

Die Erfindung betrifft einen Achsschenkel für Fahrzeuge, insbesondere für die Vorderachse eines frontangetriebenen Kraftfahrzeuges, gemäß dem Oberbegriff des Anspruchs 1. Solche Achsschenkel werden heute auch als Schwenklager bezeichnet, wenn sie nur das Radlager aufnehmen und sich eine zugeordnete Antriebswelle des Fahrzeuges bis in ihr Zentrum erstreckt.

Im Kraftfahrzeugbau sind Achsschenkel üblicherweise gegossene oder geschmiedete, einstückige Stahlteile. An dem Achsschenkel ist häufig ein Arm zur Befestigung eines Federbeines oder eines oberen Querlenkers ausgebildet, zusätzlich können ferner beispielsweise eine Spurstangenhalterung und/oder eine Querlenkeraufnahme am Achsschenkel ausgebildet sein, allgemein gesprochen Bauteile, die zur Befestigung von Radaufhängungs- oder Lenkungselementen am Achsschenkel dienen. Bei den üblichen gegossenen, geschmiedeten oder geschweißten Achsschenkeln sind diese Befestigungsbauteile einstückig mit dem Achsschenkel ausgebildet.

Aus der JP 56-82668 A ist ein Achsschenkel mit einem Grundkörper bekannt, der aus miteinander verbindbaren Blechformteilen gebildet ist. Im miteinander verbundenen Zustand umschließen diese Blechformteile einen ringförmig umlaufenden Hohlraum. An den Blechformteilen sind Befestigungspunkte ausgebildet, die zur Verbindung des Achsschenkels mit Teilen einer Fahrzeugradaufhängung bzw. einer Bremse dienen.

Aus der US 3 147 026 ist eine Verbundkonstruktion aus einem Achsschenkel und der Trägerplatte einer Trommelbremse bekannt. Der Achsschenkel besteht aus einem länglichen Blechpreßteil mit U-förmigem Querschnitt, an dessen offene Seite die Trägerplatte geschweißt ist. Durch das Verschweißen der Trägerplatte mit dem als Blechformteil ausgebildeten Achsschenkel hat das sich ergebende Verbundteil bei günstigen Herstellungskosten eine hohe Stabilität.

Aus der BE 571476 A ist eine Achskonstruktion mit einer aus Vollmaterial bestehenden Nabe bekannt, an der zwei gebogene, sich fahrzeugeinwärts erstreckende hohle Arme angeschraubt sind, die aus je zwei Blechformteilen gebildet sind. Jeder Arm erhält seine Stabilität durch eine geeignete Formgebung und Dimensionierung der ihn bildenden Blechformteile.

Der Erfindung liegt die Aufgabe zugrunde, einen Achsschenkel bereitzustellen, der gegenüber herkömmlichen Achsschenkeln gewichtssparend ausgebildet und dennoch hochstabil ist, und der darüber hinaus kostengünstig zu fertigen ist.

Diese Aufgabe ist ausgehend von einem Achsschenkel der eingangs genannten Art dadurch gelöst, daß der Hohlraum zur Aufnahme entsprechend angepaßter und den Achsschenkel insgesamt versteifender Abschnitte von Bauteilen vorbereitet ist, die der Befestigung von Radaufhängungs- oder Lenkungselementen oder einer Bremse am Achsschenkel dienen. Es handelt sich bei dem erfindungsgemäßen Achsschenkel demnach um eine Verbundkonstruktion aus den genannten Blechformteilen und versteifend ausgebildeten Abschnitten der Befestigungsbauteile, die im montierten Zustand von den Blechformteilen umschlossen werden. Die Blechformteile sind kostengünstig herstellbar und der aus ihnen aufgebaute, zumeist ringförmige Grundkörper des Achsschenkels erreicht im Verbund mit den versteifenden Abschnitten der erwähnten Befestigungsbauteile seine Betriebsfestigkeit.

Bei einer bevorzugten Ausführungsform des erfindungsgemäßen Achsschenkels füllen die ihn versteifenden Abschnitte der Befestigungsbauteile den Hohlraum bezüglich seines Querschnittes zumindest annähernd vollständig und bezüglich seiner Umfangserstreckung zumindest etwa zur Hälfte, besser zu etwa zwei Drittel und bevorzugt zu drei Viertel oder mehr aus. Die Belastbarkeit des Achsschenkels steigt mit zunehmender Erstreckung der versteifenden Abschnitte in Umfangsrichtung, allerdings schrumpfen damit die gegenüber herkömmlichen Ausführungen erzielbaren Gewichtsvorteile.

Die den Achsschenkel versteifenden Abschnitte können beispielsweise Teil eines Bremsträgers oder einer Spurstangenhalterung oder einer Querlenkeraufnahme sein. Ist der durch die Blechformteile gebildete Hohlraum des Achsschenkel-Grundkörpers ringförmig, dann haben die den Achsschenkel versteifenden Abschnitte der Befestigungsbauteile vorzugsweise die Gestalt eines Kreisringabschnitts. Die Blechformteile sind mit Aussparungen versehen, durch die die nicht in dem Hohlraum aufgenommenen Abschnitte der Befestigungsbauteile herausragen können.

Bei einer besonders bevorzugten Ausführungsform des erfindungsgemäßen Achsschenkels ist der insbesondere ringförmig ausgeführte Grundkörper des Achsschenkels aus zwei Blechformteilen gebildet, von denen das eine Blechformteil überwiegend einen U-förmigen Querschnitt aufweist und das andere Blechformteil überwiegend eben gestaltet ist. Das überwiegend eben gestaltete Blechformteil schließt dabei im montierten Zustand die offene Seite des Blechformteils mit U-förmigem Querschnitt. Der von beiden Blechformteilen umschlossene Hohlraum ist demnach torusförmig. Gemäß einer Weiterbildung hat das überwiegend eben gestaltete Blechformteil an seinem umlaufenden, inneren Rand einen in den Hohlraum ragenden Kragen, der in die den Achsschenkel versteifenden Abschnitte der Befestigungsbauteile eingreifen kann. Dieser Kragen kann einfach durch Hochstellen des entsprechenden Randes des Blechformteils hergestellt werden. Der in die versteifenden Abschnitte der Befestigungsbauteile eingreifende Kragen erhöht die Steifigkeit der gesammten Achsschenkel-Verbundkonstruktion und hat darüberhinaus den fertigungstechnischen Vorteil, daß sich ein Feinstanzen erübrigt, welches bei einem vollkommen eben ausgeführten Blechformteil zur Erzielung der geforderten Paßgenauigkeit notwendig ist.

Bei einer Ausführungsform des erfindungsgemäßen Achsschenkels sind die den Achsschenkel-Grundkörper bildenden Blechformteile durch Schrauben miteinander verbindbar, die sich durch die in dem genannten Hohlraum aufgenommenen und den Achsschenkel versteifenden Abschnitte der Befestigungsbauteile erstrecken. Diese Verbindungsart führt zum einen zu einer hohen Belastbarkeit der erfindungsgemäßen Achsschenkel-Verbundkonstruktion und ermöglicht andererseits ohne großen Aufwand eine Demontage der Befestigungsbauteile. Alternativ können nach dem Einsetzen der den Achsschenkel versteifenden Abschnitte der Befestigungsbauteile in den Hohlraum die Blechformteile auch miteinander verschweißt werden. Dies führt zu einer noch höheren Belastbarkeit der Achsschenkel-Verbundkonstruktion, hat jedoch den Nachteil, daß ein Auseinanderbau nicht mehr einfach möglich ist. Sind die Blechformteile miteinander verschraubt, enden die Schrauben bevorzugt in Gewindelöchern, welche im Außenring eines Radlagers ausgebildet sind, so daß die erfindungsgemäße Achsschenkel-Verbundkonstruktion mit dem Außenring eines Radlagers zu einer festen Einheit verschraubbar ist. Eine solche Ausführung eignet sich besonders für Radlager der sogenannten dritten Generation.

Gemäß einem bevorzugten Ausführungsbeispiel des erfindungsgemäßen Achsschenkels weist dessen Grundkörper einen angeformten Arm zur Befestigung beispielsweise eines Federbeines oder eines oberen Querlenkers auf. Der genannte Arm ist einstückig mit dem Achsschenkel-Grundkörper ausgebildet und ist ebenfalls hohl.

Bevorzugt bestehen die den Achsschenkel versteifenden Abschnitte der Befestigungsbauteile aus Vollmaterial. Sie könnten jedoch auch hohl ausgeführt sein. Das Blech der den Achsschenkel-Grundkörper bildenden Blechformteile hat bei einem Ausführungsbeispiel eine Materialdicke von etwa 3 mm. Die Materialdicke kann in Abhängigkeit der geforderten Belastbarkeit jedoch kleiner oder größer gewählt werden.

Alle zuvor genannten Ausführungsbeispiele des erfindungsgemäßen Achsschenkels sind bevorzugt derart weitergebildet, daß derjenige Teil des im Grundkörper gebildeten, umlaufenden Hohlraumes, der nicht von den versteifenden Abschnitten der Befestigungsbauteile ausgefüllt ist, mit Kunststoff-, Keramik- oder Metallschaum zumindest teilweise ausgefüllt ist. Unter dem zuvor erwähnten Begriff "Metallschaum" werden hier Metalle und Legierungen mit zellularer Struktur verstanden, die eine Porosität von in der Regel über 50 % aufweisen. Das Ausschäumen erhöht die Steifigkeit erfindungsgemäßer Achsschenkel weiter und führt außerdem zu einer verbesserten Geräuschdämpfung, so daß die Übertragung von Fahrbahngeräuschen auf die Fahrzeugkarosserie vermindert ist. Desweiteren führt das Ausschäumen des nicht von den versteifenden Abschnitten ausgefüllten Hohlraumes zu einer besseren Wärmeverteilung über den gesamten Achsschenkel. Schließlich wird durch ein solches Ausschäumen einer Korrosion im Hohlraum entgegengewirkt.

Wird ein solcher Schaum zum Ausfüllen der verbleibenden Hohlraumes im Grundkörper eingesetzt, dann ist besonders bevorzugt dieser Schaum innig mit den Blechformteilen verbunden, aus denen der Grundkörper gebildet ist. Diese innige Verbindung zwischen dem Schaum und den Blechformteilen führt zu einer deutlichen Erhöhung der Festigkeit des erfindungsgemäßen Achsschenkels.

Im Rahmen einer besonders eleganten Methode der Herstellung erfindungsgemäßer Achsschenkel, deren im Grundkörper verbleibender Hohlraum mit Metallschaum ausgefüllt ist, werden Bleche verwendet, die auf einer Seite beispielsweise mit einer Mischung aus Aluminium- und Titanhydridpulver beschichtet sind. Aus diesen Blechen werden die den späteren Grundkörper bildenden Blechformteile erzeugt, derart, daß die beschichtete Seite der Bleche nach innen weist, sich später also in dem umlaufenden Hohlraum befindet. Nach dem Zusammenfügen der Blechformteile mit den versteifenden Abschnitten wird der so gebildete Achsschenkel einer Wärmebehandlung unterzogen, die dazu führt, daß die aus Aluminium- und Titanhydridpulver bestehende Beschichtung der Bleche aufschäumt und den vorhandenen Hohlraum zumindest teilweise ausfüllt.

Ein Ausführungsbeispiel des erfindungsgemäßen Achsschenkels wird im folgenden anhand der beigefügten Figuren näher erläutert. Es zeigt:
- Fig. 1: einen Querschnitt durch eine Baueinheit, die eine Antriebswelle, eine Radnabe, ein Radlager, eine Scheibenbremse und einen erfindungsgemäßen Achsschenkel umfaßt,
- Fig. 2: die Draufsicht auf das Radlager aus Figur 1,
- Fig. 3: eine teilweise geschnitten dargestellte Draufsicht der erfindungsgemäßen Achsschenkel-Verbund-konstruktion aus Figur 1,
- Fig. 4: die Schnitte A-A und B-B aus Figur 3,
- Fig. 5: ein Blechformteil der erfindungsgemäßen Achsschenkel-Verbundkonstruktion zusammen mit zwei Befestigungsbauteilen,
- Fig. 6: ein weiteres Blechformteil der erfindungsgemäßen Achsschenkel-Verbundkonstruktion, und
- Fig. 7: den aus den in Figur 5 und Figur 6 dargestellten Blechformteilen gebildeten Grundkörper des erfindungsgemäßen Achsschenkels im Schnitt.

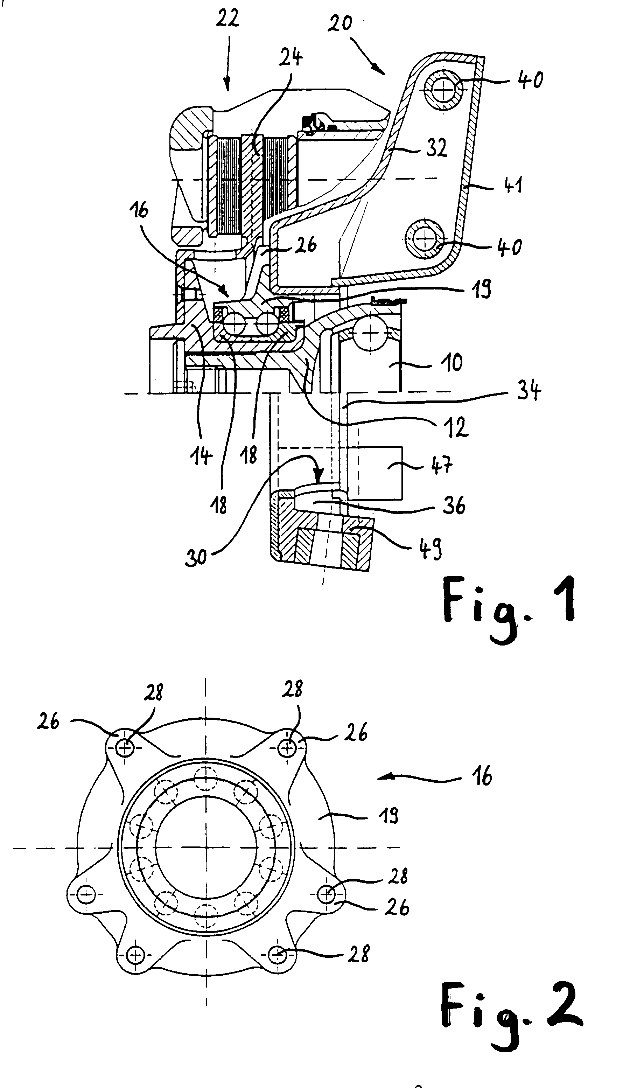

In Figur 1 ist eine Baueinheit dargestellt, wie sie an der Vorderachse eines frontangetriebenen Pkw's zum Einsatz kommen kann. Gezeigt sind ein homokinetisches Gelenk 10 einer in Figur 1 nur teilweise dargestellten, sich nach rechts fortsetzenden Antriebswelle 12, eine Radnabe 14, in die die Antriebswelle 12 gesteckt ist, und ein auf der Radnabe 14 befestigtes Radlager 16 mit zwei Innenringen 18 und einem Außenring 19, an dem ein Achsschenkel 20 in Verbundkonstruktion befestigt ist. Bei dem Radlager 16 handelt es sich um ein solches der sogenannten dritten Generation. Wie aus der in Figur 2 wiedergegebenen Draufsicht des Radlagers 16 besser hervorgeht, weist dessen Außenring 19 eine Anzahl (im dargestellten Beispiel sechs) von verdickten, radial hervorspringenden Nasen 26 auf, die mit je einem Gewindeloch 28 versehen sind. Diese Gewindelöcher 28 dienen - wie später noch beschrieben werden wird - zur Befestigung des Achsschenkels 20 am Außenring 19 des Radlagers 16. Desweiteren ist in Figur 1 eine Schwimmsattel-Scheibenbremse 22 dargestellt, deren Bremsscheibe 24 an der Radnabe 14 drehfest angebracht ist.

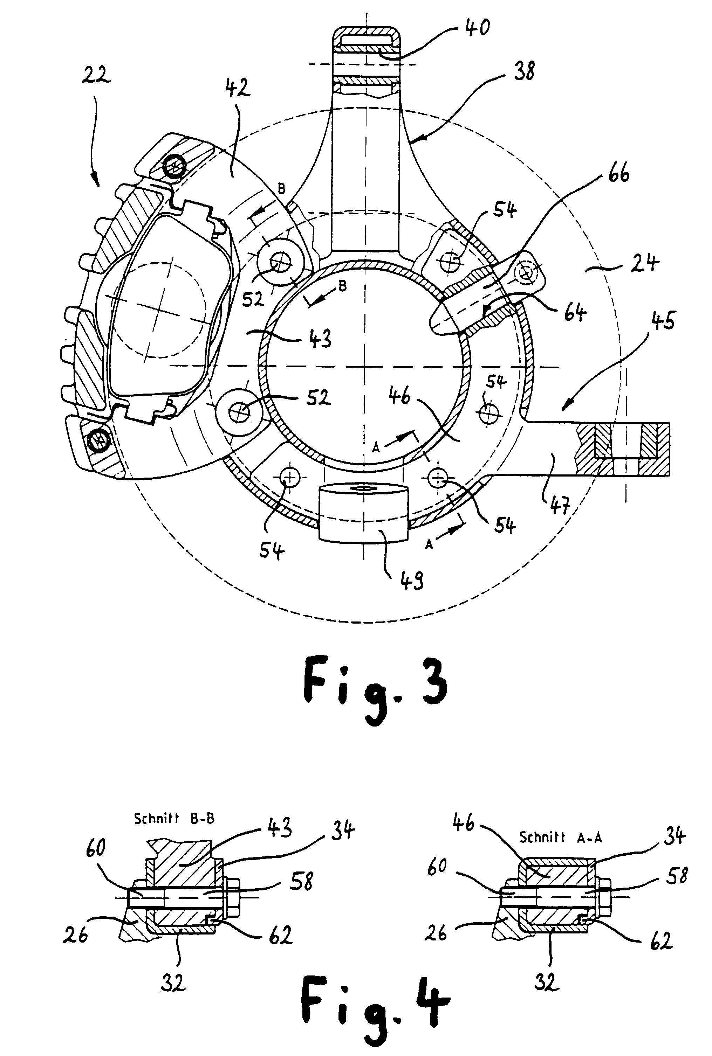

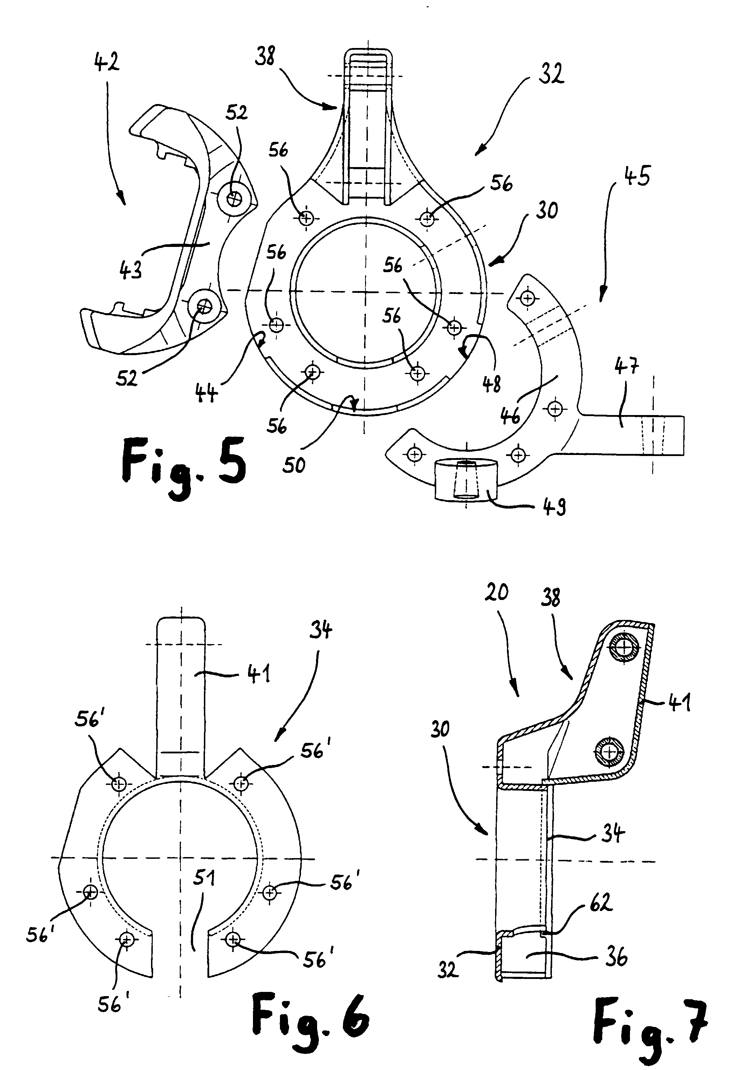

Im folgenden werden lediglich der hier interessierende Achsschenkel 20 sowie die mit ihm in Verbundbauweise zusammenwirkenden Bauteile näher erläutert. Wie am besten aus den Figuren 1 und 3 in Verbindung mit Figur 7 hervorgeht, hat der Achsschenkel 20 einen kreisringförmigen Grundkörper 30, der aus zwei Blechformteilen 32 und 34 gebildet ist, deren Gestalt insbesondere aus Figur 5 und Figur 6 gut hervorgeht. Das eine Blechformteil 32 hat einen im wesentlichen U-förmigen Querschnitt (siehe Figur 7), während das andere Blechformteil 34 weitgehend eben gestaltet ist. Das Blech der Blechformteile 32, 34 hat im dargestellten Ausführungsbeispiel eine Dicke von etwa 3 mm.

Die beiden Blechformteile 32 und 34 begrenzen zusammen einen inneren, im wesentlichen torusförmigen Hohlraum 36, dessen Funktion anschließend näher erläutert werden wird. An dem einen Blechformteil 32 ist ein angeformter, im wesentlichen radial nach außen vom Grundkörper 30 wegragender Arm 38 einstückig ausgebildet, der von zwei Buchsen 40 durchsetzt wird, so daß mittels nicht gezeigter Schrauben ein ebenfalls nicht dargestelltes Federbein an dem Arm 38 des Achsschenkels 20 befestigt werden kann. Solche Federbeine, die einen Stoßdämpfer und eine diesen konzentrisch umgebende Schraubenfeder umfassen, sind auch unter dem Begriff McPherson-Aufhängung bekannt. Die offene, der Fahrzeugmitte zugewandte Seite des hohl ausgeführten Armes 38 wird durch eine entsprechend geformte Lasche 41 verschlossen, die einstückig an dem anderen Blechformteil 34 ausgebildet ist (siehe insbes. Figuren 6 und 7). Die Buchsen 40 haben Endabschnitte mit etwas verringertem Durchmesser, so daß an beiden Enden der Buchse 40 umlaufende Schultern gebildet sind, gegen die sich die Blechseitenwände des Armes 38 abstützen können, wenn das nicht dargestellte Federbein am Arm 38 festgeschraubt wird.

Der im Grundkörper 30 gebildete, umlaufende Hohlraum 36 ist dazu bestimmt, mit Bauteilen zusammenzuwirken, die der Befestigung von Radaufhängungs- oder Lenkungselementen oder einer Bremse am Achsschenkel 20 dienen. Im gezeigten Ausführungsbeispiel sind zwei solcher Befestigungsteile vorhanden, von denen das eine ein Bremsträger 42 der Scheibenbremse 22 und das andere eine kombinierte Spurstangenhalterung und Querlenkeraufnahme 45 ist. Zum Zusammenwirken mit dem Hohlraum 36 ist am Bremsträger 42 ein stegförmiger Abschnitt 43 vorhanden, der in den Hohlraum 36 paßt und ihn in dem entsprechenden Bereich zumindest annähernd ausfüllt (siehe Figur 3 und 4). Der nicht im Hohlraum 36 aufgenommene Teil des Bremsträgers 42 ragt durch eine Aussparung 44 im Blechformteil 32 nach außen. In analoger Weise ist an der kombinierten Spurstangenhalterung und Querlenkeraufnahme 45 ein Abschnitt 46 vorhanden, der die Gestalt eines sich über etwa 190° in Umfangsrichtung erstreckenden Kreisringabschnitts hat und der, wie aus Figur 3 ersichtlich ist, ebenfalls in den Hohlraum 36 des Grundkörpers 30 paßt und diesen im entsprechenden Bereich im wesentlichen ausfüllt. Von dem Abschnitt 46 erstreckt sich eine einstückig damit ausgebildete, häufig auch Lenkhebel genannte Spurstangenhalterung 47 durch eine Aussparung 48 in der Außenumfangswand des Blechformteils 32 nach außen. Eine ebenfalls einstückig mit dem Abschnitt 46 ausgebildete Aufnahme 49 für einen unteren Querlenker der Vorderradaufhängung erstreckt sich durch eine weitere Aussparung 50 im Blechformteil 32 und durch eine Aussparung 51 im Blechformteil 34 nach außen. Es versteht sich, daß die im gezeigten Ausführungsbeispiel kombinierte Spurstangenhalterung und Querlenkeraufnahme 45 auch zweiteilig ausgebildet werden kann, wobei dann die Spurstangenhalterung und die Querlenkeraufnahme je einen versteifenden Abschnitt aufweisen, der in den Hohlraum 36 paßt.

Die Montage des Achsschenkels 20 ist denkbar einfach: Der Abschnitt 43 des Bremsträgers 42 und der Abschnitt 46 der kombinierten Spurstangenhalterung und Querlenkeraufnahme 45 werden in das Blechformteil 32 mit U-förmigem Querschnitt so eingelegt, daß Bohrungen 52 im Abschnitt 43 bzw. Bohrungen 54 im Abschnitt 46 mit entsprechenden Bohrungen 56 im Blechformteil 32 fluchten. Die Abschnitte 43 und 46 passen mit geringem radialem Spiel in den Hohlraum 36. Dann wird das andere Blechformteil 34 so mit dem Blechformteil 32 zusammengefügt, daß die an ersterem ausgebildete Lasche 41 die offene Seite des an letzterem angeformten Armes 38 schließt. Bohrungen 56' im Blechformteil 34 fluchten dann automatisch mit den Bohrungen 52, 54 und 56. Zum festen Verspannen der Blechformteile 32, 34 sowie der im durch sie gebildeten Hohlraum 36 aufgenommenen Abschnitte 43 und 46 miteinander und zum Befestigen dieser Achsschenkel-Verbund-konstruktion am Außenring 19 des Radlagers 16 werden Schrauben 58 durch die Bohrungen 52, 54, 56 und 56' gesteckt. Jede Schraube 58 weist einen Gewindeendabschnitt 60 auf, der in das entsprechende Gewindeloch 28 im Außenring 19 geführt wird, woraufhin die Schrauben 58 festgezogen werden können. Beim Festziehen greift - wie insbesondere aus Figur 4 ersichtlich - ein am Innenumfang des Blechformteils 34 ausgebildeter Kragen 62 in eine entsprechende Ausnehmung des Abschnitts 43 bzw. des Abschnitts 46 ein, so daß ein Paßsitz des Blechformteils 34 erreicht wird.

Der Bremsträger 42 und die kombinierte Spurstangenhalterung und Querlenkeraufnahme 45 sind bei dem dargestellten Ausführungsbeispiel aus dafür üblichen Metallegierungen hergestellt, wobei insbesondere die Abschnitte 43 und 46 der vorgenannten Teile aus Vollmaterial bestehen. Wie der Figur 3 zu entnehmen ist, füllen die Abschnitte 43 und 46 mehr als drei Viertel der Umfangserstreckung des Hohlraumes 36 aus. Auf diese Weise versteifen die Abschnitte 43 und 46 den Grundkörper 30 des Achsschenkels 20 derart, daß im verspannten Zustand für den vorgesehenen Einsatzzweck völlig ausreichende Belastbarkeitswerte des Achsschenkels 20 erzielt werden. Die Gewichtsersparnis gegenüber herkömmlich ausgeführten Achsschenkeln beträgt hier etwa 20 %.

Zur Demontage der Scheibenbremse 22 brauchen nur die den Abschnitt 43 des Bremsträgers 42 durchsetzenden Schrauben 58 gelöst zu werden; der Bremsträger 42 kann dann durch die Aussparung 44 radial herausgezogen werden. Zur Festigkeitserhöhung kann alternativ die Außenumfangswand des Blechformteils 32 den Bremsträger 42 im mittleren Bereich übergreifen; zum Ausbau des Bremsträgers 42 müssen dann jedoch alle Schrauben 58 gelöst werden.

Im dargestellten Ausführungsbeispiel weist der Abschnitt 46 der kombinierten Spurstangenhalterung und Querlenkeraufnahme 45 eine radiale Durchgangsausnehmung 64 auf, die mit entsprechenden Ausnehmungen in den Umfangswandungen des Blechformteiles 32 fluchtet und durch die sich ein Drehzahlmeßfühler 66 erstreckt, der Meßwerte für ein Antiblockiersystem und/oder eine Antriebsschlupfregelung liefert.

## Patentansprüche

1. Achsschenkel (20), insbesondere für die Vorderachse eines frontangetriebenen Kraftfahrzeuges, mit einem Grundkörper (30), der aus miteinander verbindbaren Blechformteilen (32, 34) gebildet ist, die im verbundenen Zustand einen umlaufenden Hohlraum (36) umschließen,
dadurch gekennzeichnet, daß der zumindest im wesentlichen torusförmige Hohlraum (36) zur Aufnahme entsprechend angepaßter und den Achsschenkel insgesamt versteifender Abschnitte (43, 46) von Bauteilen vorbereitet ist, die zur Befestigung von Radaufhängungs- oder Lenkungselementen oder einer Bremse (22) am Achsschenkel (20) dienen.

2. Achsschenkel nach Anspruch 1,
dadurch gekennzeichnet, daß die den Achsschenkel (20) versteifenden Abschnitte (43, 46) der Befestigungsbauteile den Hohlraum (36) bezüglich seines Querschnittes zumindest annähernd vollständig und bezüglich seiner Umfangserstreckung zumindest etwa zur Hälfte, bevorzugt zu etwa zwei Drittel und besonders bevorzugt zu drei Viertel oder mehr ausfüllen.

3. Achsschenkel nach Anspruch 1 oder 2,
dadurch gekennzeichnet, daß jeder der den Achsschenkel (20) versteifenden Abschnitte (43, 46) entweder Teil eines Bremsträgers (42) oder einer Spurstangenhalterung (47) oder einer Querlenkeraufnahme (49) ist, und die Blechformteile (32, 34) mit Aussparungen (44, 48, 50, 51) für die nicht in dem Hohlraum (36) aufgenommenen Abschnitte der Befestigungsbauteile versehen sind.

4. Achsschenkel nach einem der Ansprüche 1 bis 3,
dadurch gekennzeichnet, daß der insbesondere ringförmige Grundkörper (30) des Achsschenkels (20) aus zwei Blechformteilen (32, 34) gebildet ist, von denen das eine Blechformteil (32) überwiegend einen U-förmigen Querschnitt aufweist und das andere Blechformteil (34) überwiegend eben gestaltet ist.

5. Achsschenkel nach Anspruch 4,
dadurch gekennzeichnet, daß das überwiegend eben gestaltete Blechformteil (34) an seinem umlaufenden, inneren Rand einen in den Hohlraum (36) ragenden Kragen (62) aufweist, der in die den Achsschenkel versteifenden Abschnitte (43, 46) der Befestigungsbauteile eingreift.

6. Achsschenkel nach einem der vorhergehenden Ansprüche,
dadurch gekennzeichnet, daß die Blechformteile (32, 34) durch Schrauben (58) miteinander verbindbar sind, die sich durch die den Achsschenkel versteifenden Abschnitte (43, 46) der Befestigungsbauteile erstrecken.

7. Achsschenkel nach Anspruch 6,
dadurch gekennzeichnet, daß die Schrauben (58) in Gewindelöchern (28) enden, welche im Außenring (19) eines Radlagers (16) ausgebildet sind.

8. Achsschenkel nach einem der vorhergehenden Ansprüche,
dadurch gekennzeichnet, daß der Grundkörper (30) des Achsschenkels (20) einen angeformten Arm (38) zur Befestigung eines Federbeines aufweist.

9. Achsschenkel nach einem der vorhergehenden Ansprüche,
dadurch gekennzeichnet, daß die den Achsschenkel versteifenden Abschnitte (43, 46) der Befestigungsbauteile aus Vollmaterial bestehen.

10. Achsschenkel nach einem der vorhergehenden Ansprüche,
dadurch gekennzeichnet, daß der von den versteifenden Abschnitten (43, 46) der Befestigungsbauteile nicht ausgefüllte Teil des umlaufenden Hohlraumes (36) zumindest teilweise ausgeschäumt ist.

11. Achsschenkel nach Anspruch 10,
dadurch gekennzeichnet, daß der zum Ausschäumen des von den versteifenden Abschnitten (43, 46) der Befestigungsbauteile nicht ausgefüllten Teiles des umlaufenden Hohlraumes (36) verwendete Schaum ein Metallschaum ist.

12. Achsschenkel nach einem der vorhergehenden Ansprüche,
dadurch gekennzeichnet, daß das Blech der Blechformteile (32, 34) eine Materialdicke von etwa 3 mm aufweist.

13. Achsschenkel nach Anspruch 12,
dadurch gekennzeichnet, daß das Blech, aus dem die Blechformteile (32, 34) gebildet sind, einseitig so beschichtet ist, daß eine Wärmebehandlung der Blechformteile (32, 34) zur Entwicklung eines Metallschaumes führt.

14. Achsschenkel nach Anspruch 13,
dadurch gekennzeichnet, daß die Bleche, aus dem die Blechformteile (32, 34) gebildet sind, einseitig mit einer Mischung aus Aluminium- und Titanhydridpulver beschichtet sind.

## Claims

1. An axle journal (20), especially for the front axle of a front wheel drive motor vehicle, comprising a main body (30) made of sheet metal parts (32, 34) shaped so as to be suitable for interconnection and, when interconnected, enclosing a continuous cavity (36),
characterised in that the cavity (36) which is at least essentially of torus shape is prepared to receive portions (43, 46) of structural components adapted accordingly, on the whole stiffening the axle journal, and serving to mount wheel suspension or steering gear elements or a brake (22) on the axle journal (20).

2. The axle journal as claimed in claim 1, characterised in that the portions (43, 46) of the mounting components which stiffen the axle journal (20) fill the cavity (36) at least almost completely, as regards the cross section thereof, and at least approximately by one half, preferably approximately two thirds, and especially preferably by three quarters or more in respect of the circumferential extension thereof.

3. The axle journal as claimed in claim 1 or 2, characterised in that each of the portions (43, 46) which stiffen the axle journal (20) is part either of a brake carrier (42) or a steering tie rod mount (47) or a transverse link seat (49), and the shaped sheet metal parts (32, 34) are formed with openings (44, 48, 50, 51) for those portions of the mounting components not received in the cavity (36).

4. The axle journal as claimed in one of claims 1 to 3, characterized in that the main body (30), particularly of ring shape, of the axle journal (20) is formed of two shaped sheet metal parts (32, 34) of which one part (32) has a predominantly U-shaped cross section, while the other part (34) is of predominantly planar shape.

5. The axle journal as claimed in claim 4, characterised in that the predominantly planar sheet metal part (34) includes a collar (62) which is formed at its circumferentially extending inner edge and projects into the cavity (36) to enter into engagement with the portions (43, 46) of the mounting components stiffening the axle journal.

6. The axle journal as claimed in one of the preceding claims, characterised in that the shaped sheet metal parts (32, 34) are adapted to be interconnected by screws (58) which pass through the portions (43, 46) of the mounting components stiffening the axle journal.

7. The axle journal as claimed in claim 6, characterised in that the screws (58) end in threaded holes (28) formed in the outer ring (19) of a wheel bearing (16).

8. The axle journal as claimed in one of the preceding claims, characterised in that the main body (30) of the axle journal (20) is integrally formed with an arm (38) to mount a strut.

9. The axle journal as claimed in one of the preceding claims, characterised in that the portions (43, 46) of the mounting components stiffening the axle journal are made of solid material.

10. The axle journal as claimed in one of the preceding claims, characterised in that the section of the continuous cavity (36) not taken up by the portions (43, 46) of the mounting components stiffening the axle journal is filled, at least in part, with foam.

11. The axle journal as claimed in claim 10, characterised in that the foam used to fill the section of the continuous cavity (36) not taken up by the portions (43, 46) of the mounting components stiffening the axle journal is a metallic foam.

12. The axle journal as claimed in one of the preceding claims, characterised in that the sheet metal of the shaped sheet metal parts (32, 34) has a thickness of about 3 mm.

13. The axle journal as claimed in claim 12, characterised in that the sheet metal of which the shaped sheet metal parts (32, 34) are made is coated on one side such that heat treatment of the shaped sheet metal parts (32, 34) causes a metallic foam to develop.

14. The axle journal as claimed in claim 13, characterised in that the metal sheets of which the shaped sheet metal parts (32, 34) are made are coated on one side with a mixture of aluminium and titanium hydride powder.

## Revendications

1. Fusée d'essieu, en particulier pour l'essieu avant d'un véhicule à traction avant, comprenant un corps de base (30) qui est formé de pièces de tôle formées (32, 34) pouvant être assemblées entre elles qui entourent à l'état assemblées une cavité périphérique (36),
caractérisé en ce que la cavité (36) au moins principalement en forme de tore est préparée pour recevoir des portions (43, 46) de pièces adaptées de façon correspondante et raidissant au total la fusée d'essieu, qui servent à la fixation d'éléments de suspension de roues ou de direction ou d'un frein (22) à la fusée d'essieu.

2. Fusée d'essieu selon la revendication 1,
caractérisée en ce que les portions (43, 46) des pièces de fixation raidissant la fusée d'essieu (20) remplissent au moins à peu près complètement la cavité (36) en ce qui concerne sa section et au moins environ à moitié en ce qui concerne son étendue périphérique, de préférence environ aux deux tiers et de façon particulièrement préférée aux trois quarts ou plus.

3. Fusée d'essieu selon la revendication 1 ou 2,
caractérisée en ce que chacune des portions (43, 46) raidissant la fusée d'essieu (20) est soit une partie d'un support de frein (42) ou d'un maintien de barre de connexion (47) ou d'un logement de bras oscillant transversal (49) et les pièces de tôle formées (32, 34) sont pourvues d'évidements (44, 48, 50, 51) pour les portions des pièces de fixation non logées dans la cavité (36).

4. Fusée d'essieu selon l'une quelconque des revendications 1 à 3,
caractérisée en ce que le corps de base (30) en particulier annulaire de la fusée d'essieu (20) est formé de deux pièces de tôle formées (32, 34) dont l'une (32) présente une section principalement en forme de U et l'autre (34) a une forme principalement plane.

5. Fusée d'essieu selon la revendication 4,
caractérisée en ce que la pièce de tôle formée de forme principalement plane (34) présente à son bord périphérique intérieur une collerette (62) faisant saillie dans la cavité (36), qui pénètre dans les portions (43, 46) raidissant la fusée d'essieu des pièces de fixation.

6. Fusée d'essieu selon l'une quelconque des revendications précédentes,
caractérisée en ce que les pièces de tôle formées (32, 34) peuvent être assemblées entre elles par des vis (58) qui s'étendent à travers les portions (43, 46) raidissant la fusée d'essieu des pièces de fixation.

7. Fusée d'essieu selon la revendication 6,
caractérisée en ce que les vis (58) se terminent dans des trous taraudés (28) qui sont formés dans al bague extérieure (19) d'un roulement de roue (16).

8. Fusée d'essieu selon l'une quelconque des revendications précédentes,
caractérisée en ce que le corps de base (30) de la fusée d'essieu (20) présente un bras (38) formé pour la fixation d'une jambe de suspension.

9. Fusée d'essieu selon l'une quelconque des revendications précédentes,
caractérisée en ce que les portions (43, 46) raidissant la fusée d'essieu des pièces de fixation sont pleines.

10. Fusée d'essieu selon l'une quelconque des revendications précédentes,
caractérisée en ce que la partie de la cavité périphérique (36) non remplie par les portions (43, 46) raidisseuses des pièces de fixation sont au moins partiellement remplies d'un produit alvéolaire.

11. Fusée d'essieu selon la revendication 10,
caractérisée en ce que le produit alvéolaire utilisé pour remplir de produit alvéolaire la partie de la cavité périphérique (36) non remplie par les portions (43, 46) raidisseuses des pièces de fixation est un produit alvéolaire métallique.

12. Fusée d'essieu selon l'une quelconque des revendications précédentes,
caractérisée en ce que la tôle des pièces de tôle formées (32, 34) présente une épaisseur de matériau d'environ 3 mm.

13. Fusée d'essieu selon la revendication 12,
caractérisée en ce que la tôle dont sont formées les pièces de tôle formées (32, 34) est recouverte d'un côté de telle façon qu'un traitement à la chaleur des pièces de tôle formées (32, 34) provoque la formation d'un produit alvéolaire métallique.

14. Fusée d'essieu selon la revendication 13,
caractérisée en ce que les tôles dont sont formées les pièces de tôle formées (32, 34) sont revêtues d'un côté d'un mélange de poudre exhydrure de titane et d'aluminium.
